# EUROPEAN PATENT APPLICATION

(11) **EP 4 715 425 A1**
(43) Date of publication of application: **25.03.2026**
(21) Application number: 25769189.9
(22) Date of filing: 12.02.2025
(51) Int. Cl.: G01S 11/02, H04L 1/00, H04W 4/02

(54) **UWB RANGING METHOD, APPARATUS AND SYSTEM**

(30) Priority: 13.03.2024 CN 202410289397
(71) Applicant: Calterah Semiconductor Technology (Shanghai) Co., Ltd., Shanghai 201210 (CN)
(72) Inventor: MA, Zhepeng, Shanghai 201210 (CN); ZHANG, Daiqin, Shanghai 201210 (CN); ZHENG, Minnan, Shanghai 201210 (CN)
(74) Representative: WSL Patentanwälte Partnerschaft mbB
(86) International application number: PCT/CN2025/076960
(87) International publication number: WO 2025/190015

(57) **Abstract**

A UWB ranging method, apparatus and system. The UWB ranging method comprises: a UWB apparatus receiving a ranging termination information frame in a ranging report time slot, which is used for receiving the ranging termination information frame, within one ranging round ( 401); when it is determined that the ranging termination information frame has been received, the UWB apparatus forwarding the ranging termination information frame subsequent to the ranging report time slot (402); and when it is determined that the ranging termination information frame has not been received, the UWB apparatus receiving the ranging termination information frame subsequent to the ranging report time slot (403).

## Description

The present application claims priority to Chinese Patent Application No. 202410289397.4 filed to the CNIPA on March 13, 2024 and entitled "UWB Ranging Method, Apparatus and System", contents of which should be construed as being incorporated into the present application by reference.

### Technical Field

Embodiments of the present disclosure relate to, but are not limited to, the field of UWB ranging technologies, and particularly to a UWB ranging method, a UWB ranging apparatus, and a UWB ranging system.

### Background

With the improvement of living standards, people's demands for accurate location are further increased, and Ultra Wide Band (UWB) has emerged as a result. UWB can achieve positioning accuracy of less than 10cm, which is far superior to positioning solutions such as Global Navigation Satellite System (GNSS) and Bluetooth. Many practical functions can be developed by obtaining accurate positioning through UWB, and a Digital Key (DK) based on UWB ranging is one of them.

However, in UWB ranging, because there is no Acknowledge (ACK) mechanism, one party (assumed to be an Initiator) sends a data packet to the other party (assumed to be a Responder), when a receiver (Responder) does not receive it, the sender (Initiator) is not aware of this, so the data packet will not be retransmitted, causing the current ranging to fail. More seriously, some packets carry information indicating the next scheduling, when the receiver fails to receive this information, the next ranging may also fail.

### Summary

The following is a summary of subject matter described in detail herein. This summary is not intended to limit the scope of protection of the claims.

An embodiment of the present disclosure provides a UWB ranging method, including: in a ranging report slot, which is used for receiving a ranging termination information frame, in a ranging round, receiving, by a UWB apparatus, a ranging termination information frame; when the UWB apparatus determines that the ranging termination information frame has been received, forwarding, by the UWB apparatus, the ranging termination information frame subsequent to the ranging report slot; or when the UWB apparatus determines that the ranging termination information frame has not been received, receiving, by the UWB apparatus, the ranging termination information frame subsequent to the ranging report slot.

Embodiments of the present disclosure further provide a UWB apparatus, wherein the UWB apparatus includes a memory, a processor, and a UWB ranging program stored in the memory and executable by the processor, and when the UWB ranging program is executed by the processor, the steps of the UWB ranging method according to any embodiment of the present disclosure are implemented.

An embodiment of the present disclosure further provides a UWB ranging system, including a first UWB apparatus and a second UWB apparatus, wherein the first UWB apparatus is the UWB apparatus according to any embodiment of the present disclosure, wherein in one ranging round, a plurality of first UWB apparatuses respectively measure distances from the second UWB apparatus.

In the UWB ranging method, apparatus, and system according to an embodiment of the present disclosure, when the UWB apparatus confirms that the ranging termination information frame has been received, the UWB apparatus forwards the ranging termination information frame subsequent to the ranging report slot. When the UWB apparatus confirms that the ranging termination information frame has not been received, the UWB apparatus receives the ranging termination information frame subsequent to the ranging report slot, which can improve the ranging reliability of the entire system. Since the UWB apparatus (i.e., the responder) is generally installed at the vehicle end and powered by the vehicle end, the additional transmission and reception of the UWB apparatus will not affect the power consumption of the key end or the mobile phone end, that is, the solution of the present disclosure can improve the ranging reliability of the system with almost no increase in the power consumption of the system.

After the drawings and detailed description are read and understood, other aspects can be understood.

### Brief Description of Drawings

Accompanying drawings are used for providing understanding of technical solutions of the present disclosure, and form a part of the specification. They are used for explaining the technical solutions of the present disclosure together with embodiments of the present disclosure, but do not form a limitation on the technical solutions of the present disclosure.
FIG. 1A is a flowchart of UWB ranging in the related art.
FIG. 1B is a flowchart of UWB ranging flow in an adaptive hopping mode.
FIG. 1C is a flowchart of UWB ranging in a non-hopping mode.
FIG. 1D is a flowchart of UWB ranging flow in a continuous hopping mode.
FIG. 2 is a schematic diagram of a structure of a UWB ranging system according to an exemplary embodiment of the present disclosure.
FIG. 3A is a flowchart of a UWB ranging flow according to an embodiment of the present disclosure.
FIG. 3B is a flowchart of another UWB ranging flow according to an embodiment of the present disclosure.
FIG. 4 is a flowchart of a UWB ranging method according to an embodiment of the present disclosure.
FIG. 5 is a schematic diagram of a wired connection mode between a plurality of responders according to an embodiment of the present disclosure.
FIG. 6A is a schematic diagram of a process of synchronizing ranging termination information frames between a plurality of responders according to an embodiment of the present disclosure.
FIG. 6B is a schematic diagram of another process of synchronizing ranging termination information frames between a plurality of responders according to an embodiment of the present disclosure.
FIG. 6C is a schematic diagram of another process of synchronizing ranging termination information frames between a plurality of responders according to an embodiment of the present disclosure.
FIG. 7 is a schematic diagram of a structure of a UWB apparatus according to an exemplary embodiment of the present disclosure.

### Detailed Description

A plurality of embodiments are described in the present disclosure, but the description is exemplary rather than restrictive. It will be apparent to those of ordinary skills in the art that there may be more embodiments and implementation solutions within the scope contained in the embodiments described in the present disclosure. Although many possible combinations of features are shown in the accompanying drawings and discussed in specific implementations, many other combinations of the disclosed features are also possible. Unless expressly limited, any feature or element of any embodiment may be used in combination with, or may replace, any other feature or element in any other embodiment.

The present disclosure includes and contemplates combinations with features and elements known to those of ordinary skills in the art. The disclosed embodiments, features and elements of the present disclosure may also be combined with any conventional features or elements to form the unique inventive solutions defined by the claims. Any feature or element in any embodiment may also be combined with a feature or an element from another invention scheme to form another unique invention scheme defined by the claims. Accordingly, it should be understood that any of the features shown and/or discussed in the present disclosure may be implemented alone or in any suitable combination. Thus the embodiments are not subject to limitations other than those made in accordance with appended claims and their equivalents thereof. In addition, various modifications and changes can be made within the protection scope of the appended claims.

Further, when describing representative embodiments, a method and/or process may have been presented as steps in a particular sequence in the specification. However, to an extent that the method or process does not depend on the particular sequence of the steps herein, the method or process should not be limited to the steps in the particular sequence. Those of ordinary skills in the art will understand that other sequences of steps may also be possible. Therefore, the particular sequence of the steps illustrated in the specification should not be interpreted as a limitation on claims. In addition, the claims directed to the method and/or process should not be limited to performing the steps according to the written sequence. Those skilled in the art may easily understand that these sequences may be changed, and the changed sequences are still maintained in the essence and scope of the embodiments of the present disclosure.

Unless otherwise defined, technical terms or scientific terms publicly used in the embodiments of the present disclosure should have common meaning as understood by those of ordinary skills in the art to which the present disclosure belongs. Wordings "first", "second" or a similar wording used in the embodiments of the present disclosure do not indicate any order, quantity or importance, but are merely used to distinguish different components. Wordings "include", "include" or the like mean that an element or item preceding the wording encompasses elements or items enumerated after the wording and their equivalents, and does not exclude other elements or items.

Taking an electronic devices and a vehicle that perform UWB ranging as an example, the UWB ranging involves two types of roles: initiator and responder. Herein, the initiator is an electronic device with digital key function such as a mobile phone or car key, which plays the role of a UWB ranging initiator. The responder is an anchor point at the vehicle end. In order to realize positioning of the initiator, there are generally a plurality of anchor points at the vehicle end, which are fixed on the vehicle body respectively to cooperate with the initiator to perform the positioning. Herein the responder may be referred to as a first UWB apparatus and the initiator may be referred to as a second UWB apparatus. In the present disclosure, unless otherwise specified, the UWB apparatus refers to the first UWB apparatus.

Each pair of UWB ranging parties (initiator and responder) will maintain their ranging interaction through a session. The initiator presets a plurality of time segments consisting of ranging blocks for each responder in time. Herein, each ranging block contains a plurality of ranging rounds. The initiator and each responder complete the ranging interaction within one ranging round in each ranging block. In one ranging round, each pair of UWB ranging parties completes the ranging interaction with each other sequentially. In some examples, there is an idle period between adjacent ranging rounds to prevent communication collisions. After the ranging interaction in a plurality of ranging blocks, the initiator obtains its positioning relative to the plurality of responders.

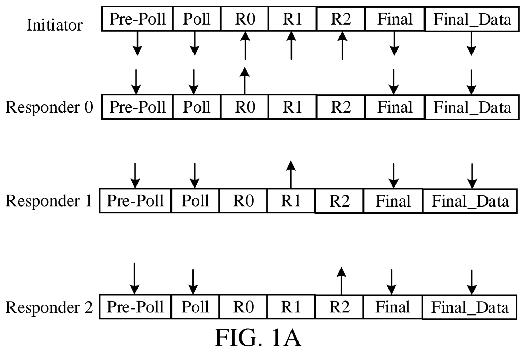

In order to improve ranging efficiency, a process of one ranging round may be as shown in FIG. 1A. The initiator first broadcasts a ranging synchronization frame in q ranging synchronization slot Pre-Poll and broadcasts a ranging start frame to all responders in a ranging start slot Poll (the present disclosure takes three responders: responder 0 to responder 2 as an example, and in other examples, the number of responders can be set as needed), and then receives ranging response frames from responder 0, responder 1 and responder 2 sequentially in a plurality of ranging response slots R0 to R2, and then broadcasts a ranging termination frame in a ranging termination slot Final, and broadcasts a ranging termination information frame in a ranging report slot Final_Data to all responders, then this ranging round is over. Herein, n is between 0 and Y-1 and Y represents the number of responders. Each UWB ranging pair obtains a slot (Slot i) for performing a ranging response according to ranging-related information carried in the ranging synchronization frame in a ranging round, wherein i represents a slot sequence number.

It can be seen from the above that each ranging round includes a plurality of slots (Slot), and each group of UWB ranging parties send and receive a plurality of types of data frames in specified slots according to transmission timing. Data frames transmitted in each slot is described as follows:
Ranging synchronization slot Pre-Poll: the initiator sends configuration information of the current ranging round to each responder through a ranging synchronization frame, and each responder simultaneously receives the ranging synchronization frame in a same time domain and a same frequency domain. The ranging synchronization frame includes following configuration parameters: a UWB session id (UWB Session ID), an STS index (Poll STS Index) of a subsequent ranging start frame, a ranging block index (Ranging Block), a hop flag bit (Hop Flag), and a ranging round index (Round Index).

Ranging start slot Poll: the initiator sends a ranging start frame to each responder so that the initiator records a transmission timestamp and each responder records a reception timestamp.

Ranging response slots R0 to R2: each responder sequentially sends a ranging response (Response) frame to the initiator. Each responder respectively records its transmission time stamp for transmitting the respective response frame, and the initiator sequentially records the reception time stamp for receiving each response frame.

Ranging termination slot Final: the initiator sends a ranging termination frame to each responder, and a plurality of responder receive the ranging termination frame at the same time. The Ranging termination frame marks an end of one ranging round.

Ranging report slot Final_Data: the initiator sends ranging termination information frame to the responders, and the ranging termination information frame includes a ranging result of each responder for the current round and the next ranging time information of each responder. The ranging termination information frame includes the following configuration parameters: a UWB session id (UWB Session ID), a ranging block index (Ranging Block), a hop flag bit (Hop Flag), a ranging round index (Round Index), a STS index of the previous ranging termination frame (Final STS Index), a time difference between the transmission time of the ranging start frame and the transmission time of the ranging termination frame of the initiator (Ranging Timestamp FINAL TX), the number of timestamps to be followed in this message (Number Ranging Responders), a responder index (Responder Index), a time difference between the initiator's reception of the responder's ranging response frame and reception of the ranging start frame (Ranging Timestamp Responder), a range of values from 1.5 cm to 3.6 m at different confidence levels (Ranging Timestamp Uncertainty Responder), and a state of the response framework from a response procedure (Ranging Status Responder).

Herein, according to different ranging modes, the ranging termination information frame includes a flag bit indicating how a ranging round occupied in a subsequent ranging block changes, for example:
No hopping: a sequence number of a ranging round for performing ranging in the current ranging block is the same as a sequence number of a ranging round for performing ranging in the previous ranging block, that is, it remains unchanged.

Continuous hopping: a sequence number of the ranging round used for ranging in each ranging block may change, which is calculated according to a formula in a protocol specification. This formula ensures that positions of a ranging round calculated in a same ranging block for both UWB ranging parties remain consistent.

Adaptive hopping: the initiator dynamically identifies whether it is required to change the sequence number of the ranging round according to environmental situation. When the initiator considers that the environmental situation of the current ranging round is good, the initiator still selects the ranging round for ranging for the next time (i.e. Hop_Flag = 0); when the initiator considers that the environmental situation of the current ranging round is not good, the initiator sets Hop_Flag to 1 in the ranging termination information frame, and notifies the responder to determine the sequence number of the ranging round in the next ranging block according to the formula specified in the protocol specification.

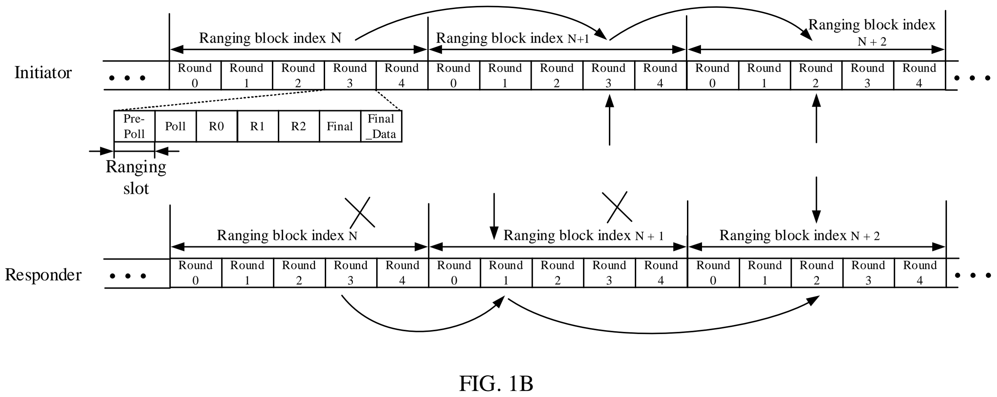

Herein, in the last interaction of the ranging round, the initiator sends the ranging result and information related to the next ranging round to each responder in the ranging termination information frame. There is only one initiator per UWB ranging round, but it is possible that a plurality of responders are provided. Since UWB has no ACK mechanism, the initiator is not sure whether all responder parties have received the ranging termination information frame. In addition, since the ranging termination information frame carries result information of the current ranging round and the time information of the next ranging round, when some responders fail to receive the ranging termination information frame, the ranging result of the current ranging round is invalid, which may also lead to the failure of the next ranging round, and has a great impact on ranging. Three different modes of FIGs. 1B to 1D will be described below.

As shown in FIG. 1B, in the adaptive hopping mode, when the responder does not receive the ranging termination information frame, the ranging in the current ranging block fails. In addition, during a ranging process of a next ranging block, the responder will perform ranging according to the sequence number calculated by the formula specified in the protocol specification. However, assuming that the initiator determines that the ranging environment is ideal according to previous interactions, the initiator sets Hop_flag to 0 in the ranging termination information frame, which means that the initiator performs ranging at the same sequence number of ranging round in the next ranging block, so that the transmission and reception of the initiator and responder will be staggered with high probability in the next ranging block. As a result, the ranging in the next ranging block fails (unless the ranging round calculated according to the formula is exactly the same as that of the previous ranging block, but this probability is very low).

It should be indicated that in the current solution, the failure of the responder to successfully receive the ranging termination information frame will not cause all subsequent ranging interactions to fail, and will be automatically corrected subsequently. That is, in the adaptive hopping mode, the failure of the responder to receive the last ranging termination information frame may lead to ranging failure of two ranging rounds (Ranging Block N and Ranging Block N+1 in FIG. 1B).

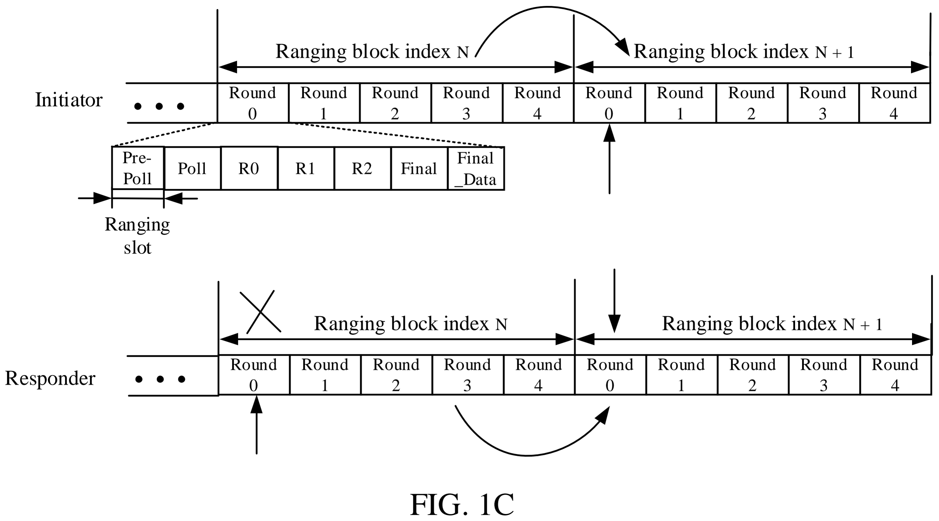

As shown in FIG. 1C, in the non-hopping mode, since the sequence number of the ranging round for performing ranging in each ranging block is fixed, the failure of the reception of the ranging termination information frame in the ranging process of the previous ranging block will not affect the ranging of the next ranging block, but will reduce a ranging efficiency.

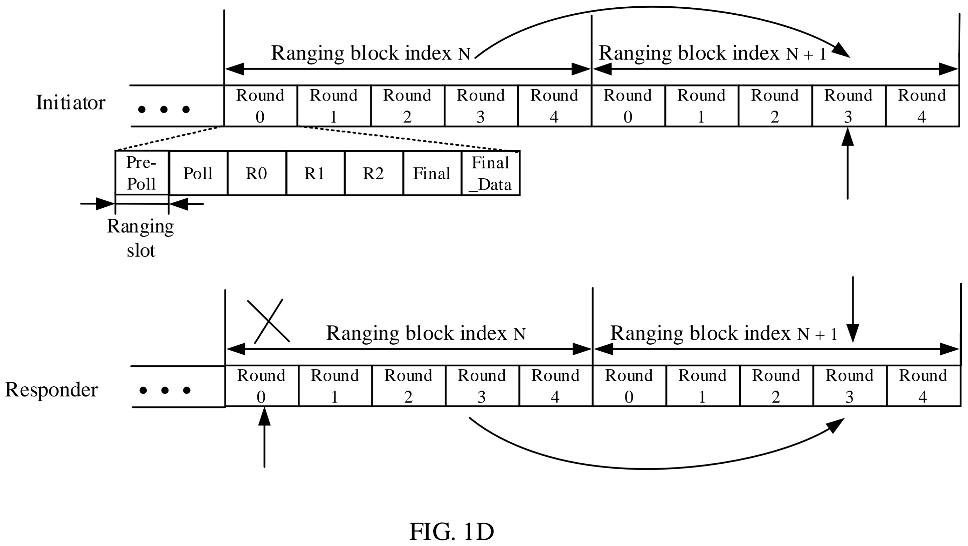

As shown in FIG. 1D, in the continuous hopping mode, in one ranging round, the failure of the responder to successfully receive the ranging termination information frame will only affect the ranging of the current ranging block, but will not affect the ranging of the next ranging block.

To sum up, in the current ranging scheme, in one ranging block, when the previous several ranging interaction processes are normal, and only the last ranging termination information frame is received by the responder abnormally, the responder fails in ranging of the current ranging block. With the adaptive hopping mode, two ranging opportunities (the current ranging block and the next ranging block) may be lost, and with the non-hopping mode and the continuous hopping mode, the ranging result in the current ranging block may be lost.

Therefore, the present disclosure provides a solution that improves a success rate of UWB ranging by improving a possibility that each responder successfully receives the ranging termination information frame, thereby improving ranging reliability of the system.

In addition, the present disclosure can be expanded from positioning scenarios of vehicles and electronic devices to other applicable scenarios, such as application scenarios of mobile phones and automatic gates, and the solution of the present disclosure does not increase power consumption on the electronic device side.

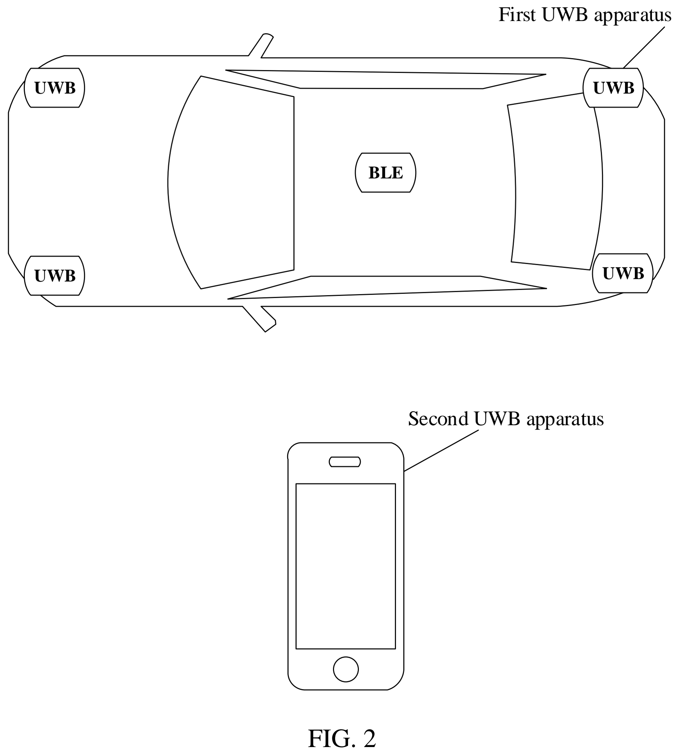

As shown in FIG. 2, an embodiment of the present disclosure provides a UWB ranging system including a first UWB apparatus and a second UWB apparatus, wherein a plurality of first UWB apparatuses measure distances from the second UWB apparatus to the plurality of first UWB apparatuses respectively in one ranging round.

In some exemplary embodiments, the first UWB apparatus may be a responder, however, the present disclosure is not limiting thereto. The explanation is given below by taking a case in which the first UWB apparatus is a responder as an example.

In some exemplary embodiments, the second UWB apparatus may be an initiator, however, the present disclosure is not limiting thereto. The explanation is given below by taking a case in which the second UWB apparatus is an initiator as an example.

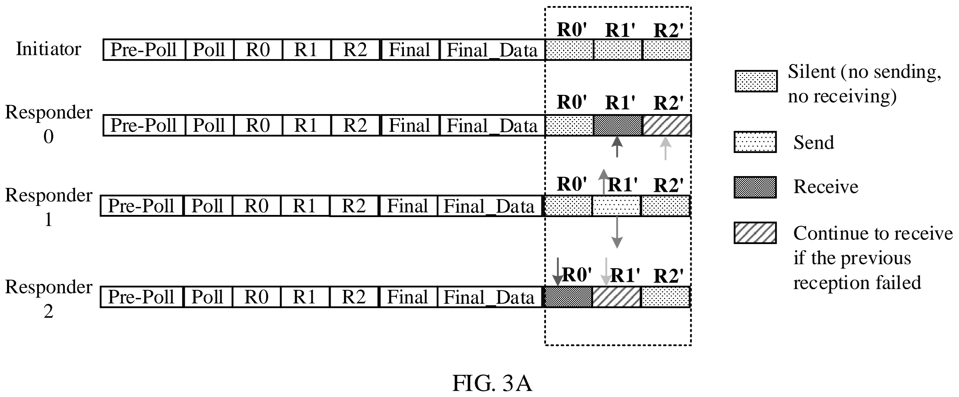

In some exemplary embodiments, as shown in FIGs. 3A-3B, a ranging process is performed between a plurality of responders and one initiator in one ranging round, and optionally, the ranging process in one ranging round includes:
In a Ranging synchronization slot Pre-Poll: the initiator sends configuration information of the current ranging round to each responder through a ranging synchronization frame, and a plurality of responders simultaneously receive the ranging synchronization frame in the same time domain and frequency domain.

In a Ranging start slot Poll: the initiator sends a ranging start frame to each responder so that the initiator records a transmission timestamp and each responder records a reception timestamp.

In Ranging response slots R0 to R2: each responder sequentially sends a ranging response (Response) frame to the initiator. Each responder respectively records the transmission time stamp for transmitting the respective response frame, and the initiator sequentially records the reception time stamp for receiving each response frame.

In a Ranging termination slot Final: the initiator sends a ranging termination frame to each responder, and each responder receives the ranging termination frame. The Ranging termination frame marks an end of the ranging round.

In a Ranging report slot Final_Data: the initiator sends ranging results of a plurality of responders of the current round and time information of next ranging to each responder through the ranging termination information frame, which are received by the plurality of responders at the same time. It is assumed that among the responders 0 to 2, only the responder 1 successfully receives the ranging termination information frame, and the responder 0 and the responder 2 do not receive the ranging termination information frame.

In Forwarding slots R0' to R2': the responder confirming that the ranging termination information frame has been received forwards the ranging termination information frame in a forwarding slot; even if the responder did not receive the ranging termination information frame, the responder can still receive the ranging termination information frame in a forwarding slot.

In some exemplary embodiments, the responder confirming that the ranging termination information frame has been received forwards the ranging termination information frame in one of a plurality of forwarding slots.

As shown in FIG. 3A, for responder 0, since it has not received the ranging termination information frame, responder 0 will neither send nor receive the ranging termination information frame in the forwarding slot R0'. In the forwarding slot R1', the responder 0 will attempt to receive the ranging termination information frame. When the reception is successful, the current ranging round ends, and no subsequent reception will be made. When the reception fails, it will be attempted again in the forwarding slot R2', and the cycle will be repeated until all attempt opportunities are exhausted.

For responder 1, since it has received the ranging termination information frame, it no longer needs to receive the ranging termination information frame, but needs to send the ranging termination information frame. Responder 1 will send the ranging termination information frame in the forwarding slot R1', and remain silent in other forwarding slots.

For responder 2, since it has not received the ranging termination information frame, it will attempt to receive the ranging termination information frame in all other forwarding slots except for the forwarding slot R2', and once it successfully received the ranging termination information frame, it will stop subsequent reception. When the reception fails in a certain forwarding slot, reception attempts continue in the next forwarding slot until all attempt opportunities are exhausted.

In some other exemplary embodiments, the responder acknowledging the reception of the ranging termination information frame forwards the ranging termination information frame a plurality of times in a plurality of forwarding slots.

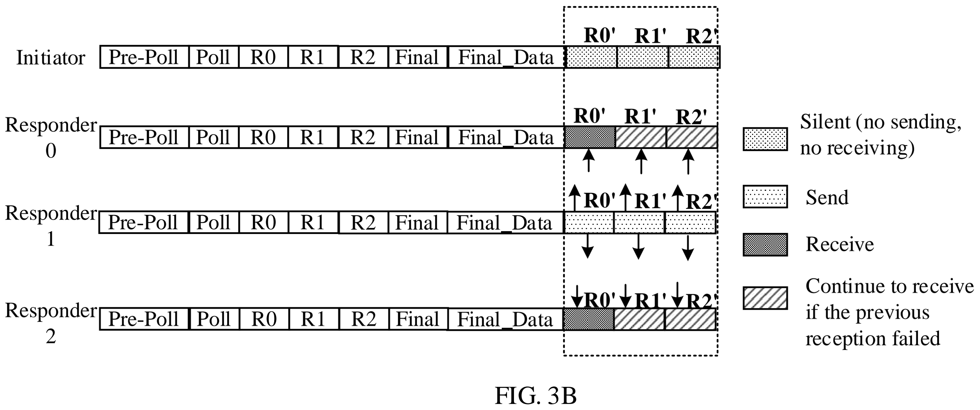

As shown in FIG. 3B, for responder 0, since it has not received the ranging termination information frame, it will start to attempt to receive the ranging termination information frame from the forwarding slot R0', and when the reception is successful, it will stop the reception; when the reception fails, reception attempts continue at the next forwarding slot until all attempt opportunities are exhausted (i.e., all forwarding slots are exhausted).

For responder 1, since it has received the ranging termination information frame, it starts to continuously transmit the ranging termination information frame from the forwarding slot R0' until all transmitting opportunities are exhausted (i.e. all forwarding slots are exhausted).

For responder 2, since it has not received the ranging termination information frame, it will start to attempt to receive the ranging termination information frame from the forwarding slot R0', and when the reception is successful, it will stop the reception; when the reception fails, reception attempts continue in the next forwarding slot until all attempt opportunities are exhausted.

In an embodiment of the present disclosure, the responder may forward the ranging termination information frame in a wireless communication mode, or may forward the ranging termination information frame over a wired link.

In some exemplary embodiments, the wireless communication mode includes any one of Bluetooth transmission, UWB transmission, or UWB narrowband transmission.

In some exemplary embodiments, in at least one forwarding slot subsequent to the ranging report slot, the responder forwards the ranging termination information frame in a wireless communication mode.

In some exemplary embodiments, the number of forwarding slots does not exceed the number of devices that are responders.

In some exemplary embodiments, signal transmission power used by the responder for forwarding the ranging termination information frame is less than signal transmission power used by the responder for transmitting the ranging response frame in the ranging round.

In some exemplary embodiments, the responder directly forwards the ranging termination information frame over a wired link, or a plurality of responders are all connected with a controller through data lines, and the responders forward the ranging termination information frame through the controller.

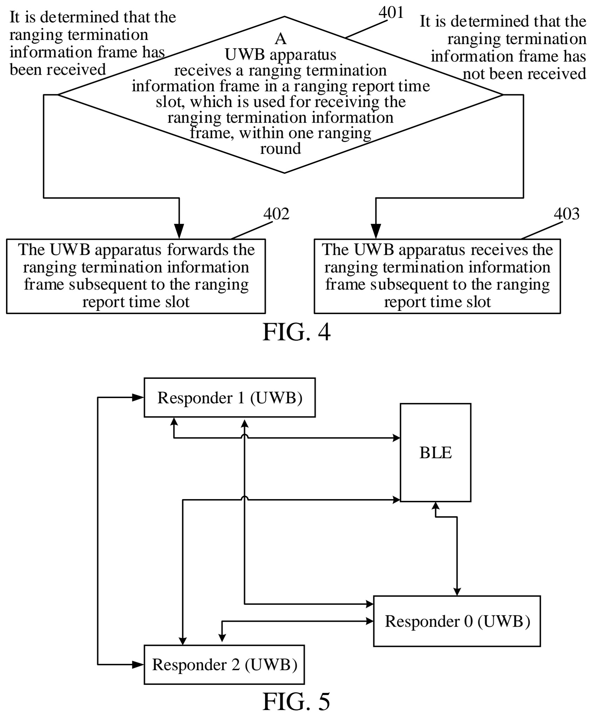

As shown in FIG. 4, an embodiment of the present disclosure provides a UWB ranging method, including following steps.

Step 401: receiving a ranging termination information frame by a UWB apparatus in a ranging report slot, which is used for receiving the ranging termination information frame, within one ranging round.

Step 402: when the UWB apparatus determines that the ranging termination information frame has been received, forwarding the ranging termination information frame subsequent to the ranging report slot by the UWB apparatus.

Step 403: when the UWB apparatus determines that the ranging termination information frame has not been received, receiving the ranging termination information frame subsequent to the ranging report slot by the UWB apparatus.

In an embodiment of the present disclosure, the UWB apparatus is the first UWB apparatus described above. The UWB apparatus may be a responder, however, the present disclosure is not limited thereto. The explanation is given below by taking a case in which the UWB apparatus is a responder as an example.

In some exemplary embodiments, in the ranging report slot, the ranging termination information frame received by the UWB apparatus is a ranging termination information frame received from a second UWB apparatus.

In an embodiment of the present disclosure, the second UWB apparatus may be an initiator, however, the present disclosure is not limited thereto. The explanation is given below by taking a case in which the second UWB apparatus is an initiator as an example. In one ranging round, one or more UWB apparatuses respectively perform ranging interactions with the second UWB apparatus to locate the second UWB apparatus.

In an embodiment of the present disclosure, the UWB apparatus receives the ranging termination information frame from the second UWB apparatus, and forwards the ranging termination information frame to another UWB apparatus, so as to improve a success rate of reception of the ranging termination information frame by each UWB apparatus, and further improve a success rate of the ranging in the next ranging block.

In some exemplary embodiments, subsequent to the aforementioned ranging report slot, the ranging termination information frame received by the UWB apparatus is a ranging termination information frame received from another UWB apparatus.

Optionally, in other examples, subsequent to the aforementioned ranging report slot, when the UWB apparatus receives the ranging termination information frame from another UWB apparatus, the UWB apparatus may also forward the ranging termination information frame in one or more forwarding slots.

In some exemplary embodiments, the forwarded ranging termination information frame is symmetrically encrypted.

When forwarding the ranging termination information frame, the UWB apparatus encrypts the ranging termination information frame using a symmetric key, and other UWB apparatuses that have received the ranging termination information frame may decrypt the ranging termination information frame using the symmetric key. Symmetric key encryption is also called private key encryption or shared key encryption, that is, both parties sending and receiving data must use the same key to encrypt and decrypt plaintext. In an embodiment of the present disclosure, the symmetric key may be generated according to following configuration parameters: a UWB session ID and an STS index value.

In some exemplary embodiments, the ranging termination information frame includes ranging time differences corresponding to a plurality of UWB apparatuses respectively, wherein a single ranging time difference is a time difference between the time when the second UWB apparatus transmits a ranging start frame and the time when the second UWB apparatus receives a ranging response frame from the UWB apparatus.

UWB ranging uses a time of flight (TOF) method as the ranging algorithm. Each UWB apparatus obtains its own corresponding ranging time difference from the ranging termination information frame. According to a UWB electromagnetic wave propagation speed and the ranging time difference, a distance value between each UWB apparatus and the second UWB apparatus can be obtained.

In some exemplary embodiments, the signal transmission power used by the UWB apparatus for forwarding the ranging termination information frame, is less than the signal transmission power used by the UWB apparatus for transmitting the ranging response frame in the ranging round. By reducing the signal transmission power used for forwarding the ranging termination information frame, the power consumption can be reduced, and the signal interference can be reduced.

In some exemplary embodiments, a plurality of UWB apparatuses are provided, and when it is determined that the ranging termination information frame has been received, the plurality of UWB apparatuses forward the ranging termination information frame in a time-sharing manner in a plurality of forwarding slots.

In an embodiment of the present disclosure, when the present UWB apparatus receives the ranging termination information frame in a certain forwarding slot, the receiver may be turned off and no longer receive the ranging reception information frames forwarded by other UWB apparatuses.

In some exemplary embodiments, the UWB apparatus forwards the ranging termination information frame in a wireless communication mode in at least one forwarding slot.

In some exemplary embodiments, each ranging round includes Y forwarding slots, Y is the number of the UWB apparatuses, each UWB apparatus corresponds to one forwarding slot. The UWB apparatus that has received the ranging termination information frame forwards, in its corresponding forwarding slot, the ranging termination information frame in a wireless communication mode.

Exemplarily, the wireless communication mode includes any one of Bluetooth transmission, UWB transmission, or UWB narrowband transmission.

In some exemplary embodiments, the method further includes: receiving, in a receiving slot and by the UWB apparatus that has not received the ranging termination information frame, the ranging termination information frame that is forwarded.

In the present embodiment, the receiving slot may be a slot other than its corresponding forwarding slot among the Y forwarding slots.

In some exemplary embodiments, the Y forwarding slots are subsequent to the ranging report slot, and a transmission order of the UWB apparatuses corresponding to the Y forwarding slots is the same as a transmission order of the UWB apparatuses corresponding to the Y ranging response frames.

In a related technical solution, in a ranging round, a lower limit of the number of slots is Slotmin = 4+Y. In FIG. 1A, taking three responders as an example, there are at least seven slots in one ranging round.

In the present disclosure, the lower limit of the number of slots in one ranging round is Slotmin=4+Y+Y, and Y is a natural number greater than or equal to 2. It can be seen that in the solution of the present disclosure, the lower limit of the number of slots in one ranging round is more than that in the original solution by Y, wherein an order of the increased Y slots corresponds one-to-one to an order in which each previous responder transmits the ranging response frame. When the responder X successfully receives the ranging termination information frame in the ranging report slot, the responder X will send the ranging termination information frame in the forwarding slot Rx'. When the responder X fails to successfully receive the ranging termination information frame in the ranging report slot, the responder X will attempt to receive the ranging termination information frame in a forwarding slot other than the forwarding slot Rx'.

Assuming that the ranging of one ranging round is completed, and after the initiator sends the ranging termination information frame, the responder 0 and the responder 2 fail to receive the ranging termination information frame, and the responder 1 succeeds in receiving the ranging termination information frame, as shown in FIG. 3A, an embodiment of the UWB ranging flow according to the embodiment of the present disclosure is as follows:
For responder 0, since it has not received the ranging termination information frame, it will neither send nor receive the ranging termination information frame (i.e. remain silent) in a corresponding forwarding slot R0'. In the forwarding slot R1', the responder 0 will attempt to receive the ranging termination information frame. When the reception is successful, the current ranging round ends, and no subsequent reception will be made. When the reception fails, it will be attempted again in the forwarding slot R2', and the cycle will be repeated until all attempt opportunities are exhausted.

For responder 1, since it has received the ranging termination information frame, it no longer needs to receive the ranging termination information frame, but needs to send the ranging termination information frame, it will send the ranging termination information frame on its corresponding forwarding slot R1', and remain silent in other forwarding slots.

For the responder 2, it also has not received the ranging termination information frame, and it will attempt to receive the ranging termination information frame in all other forwarding slots except for its corresponding forwarding slot R2', and once it successfully received the ranging termination information frame, it will stop subsequent reception. When the reception fails in a certain forwarding slot, reception attempts continue in the next forwarding slot until all attempt opportunities are exhausted.

In some other exemplary embodiments, the UWB apparatus that has received the ranging termination information frame forwards the ranging termination information frame to other UWB apparatuses in a plurality of forwarding slots.

Exemplarily, each ranging round includes M forwarding slots, M is a natural number greater than or equal to 1, and each responder that has received the ranging termination information frame forwards the ranging termination information frame in a wireless communication mode in each of the M forwarding slots.

In embodiments of the present disclosure, M may or may not be equal to Y, and the present disclosure is not limited thereto.

As shown in FIG. 3B, for the responder that has successfully received the ranging termination information frame, it may also attempt to transmit the ranging termination information frame in all forwarding slots, for the responder that has failed to receive the ranging termination information frame, it attempts to receive the ranging termination information frame in all possible forwarding slots, and when the reception is successful, the reception is stopped. When the reception fails, reception attempts continue in the next forwarding slot until all opportunities are exhausted.

In the following, Y=3 and M=3 are taken as an example. For responder 0, since it has not received the ranging termination information frame, it will start to attempt to receive the ranging termination information frame from the forwarding slot R0', when the reception is successful, the reception is stopped; When reception fails, reception attempts continue in the next forwarding slot until all opportunities are exhausted.

For responder 1, since it has received the ranging termination information frame, it will send the ranging termination information frame from the forwarding slot R0' until all opportunities are exhausted.

For the responder 2, since it has not received the ranging termination information frame, it will attempt to receive the ranging termination information frame from the forwarding slot R0', when the reception is successful, the reception is stopped. When reception fails, reception attempts continue in the next forwarding slot until all opportunities are exhausted.

In some other exemplary embodiments, the UWB apparatus that has received the ranging termination information frame forwards the ranging termination information frame over a wired link.

In an embodiment of the present disclosure, a plurality of UWB apparatuses may be connected to each other over a wired link, and the UWB apparatus that has received the ranging termination information frame forwards the ranging termination information frame to other UWB apparatuses over the wired link.

Considering that in the digital key solution, the UWB apparatus is installed on the vehicle end, and there are generally a plurality of UWB apparatuses, each child UWB module will be connected to the parent UWB module in a wired manner, generally speaking, each child UWB module and the parent UWB module will also be connected to a non-UWB modules (such as BLE module), it is also not excluded that a plurality of child UWB modules are connected in a wired manner. As shown in FIG. 5, it is assumed that in FIG. 5, responder 0 is the parent UWB module, and responder 1 and responder 2 are child UWB modules. In an embodiment of the present disclosure, BLE (Bluetooth Low Energy) module is a low-power-consumption device supporting Bluetooth protocol.

The initiator transmits the ranging termination information frame by broadcasting, and each responder (that is, each UWB module in FIG. 5) will attempt to receive the ranging termination information frame. As long as one responder has successfully received the ranging termination information frame, and then transmits it to the responder who did not receive the ranging termination information frame in a wired manner, the anti-interference ability of the system can be improved, thereby improving an overall success rate of ranging.

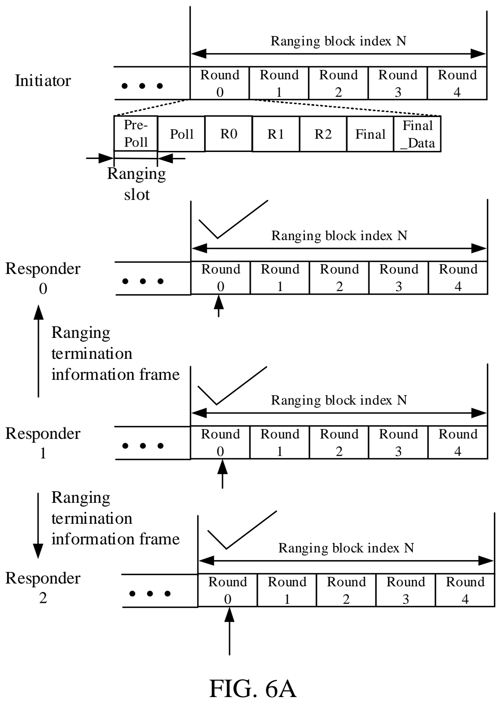

As shown in FIG. 6A, taking three responders on the receiver side as an example, assuming that only one responder has received the last ranging termination information frame when ranging in the ranging block N, the responder transmits the ranging termination information frame to other responders in a wired manner.

In the case that the ranging termination information frame is not received, by synchronizing the ranging termination information frame among a plurality of responders, it is possible to ensure that each responder successfully performs ranging in the current ranging block. For the adaptive hopping mode, since scheduling information of the next ranging is acquired at the same time through the synchronization of the ranging termination information frame, the scheduling of the responder and the initiator in the next ranging block is ensured to be aligned, and a success rate of ranging in the next ranging block is also improved. There are many ways to synchronize the ranging termination information frames among a plurality of responders by wires, which will be described in detail below.

In some exemplary embodiments, the UWB apparatus directly forwards the ranging termination information frame over a wired link.

Exemplarily, a plurality of UWB apparatuses are connected in pairs over wired links and the UWB apparatus that has received the ranging termination information frame forwards the ranging termination information frame to an adjacent UWB apparatus through a wired link with the adjacent UWB apparatus.

In the present embodiment, there is no concept of a general module among the plurality of responders, and the plurality of responder nodes are parallel and connected by wires. A responder node that has received the ranging termination information frame directly sends it to responder nodes that have not received the ranging termination information frame, or a responder node that has not received the ranging termination information frame requests the responder node that has received the ranging termination information frame to send the ranging termination information frame.

In some exemplary embodiments, a plurality of UWB apparatuses are each connected to a controller through a data line, and the UWB apparatuses forward the ranging termination information frame through the controller.

In some exemplary embodiments, the controller may be a parent UWB apparatus. For example, the plurality of UWB apparatuses includes a parent UWB apparatus and one or more child UWB apparatuses. Each child UWB apparatus is connected to the parent UWB apparatus over a wired link, the child UWB apparatus that has received the ranging termination information frame forwards the ranging termination information frame to the parent UWB apparatus over the wired link, and the parent UWB apparatus forwards the ranging termination information frame to child UWB apparatuses that have not received the ranging termination information frame over the wired link.

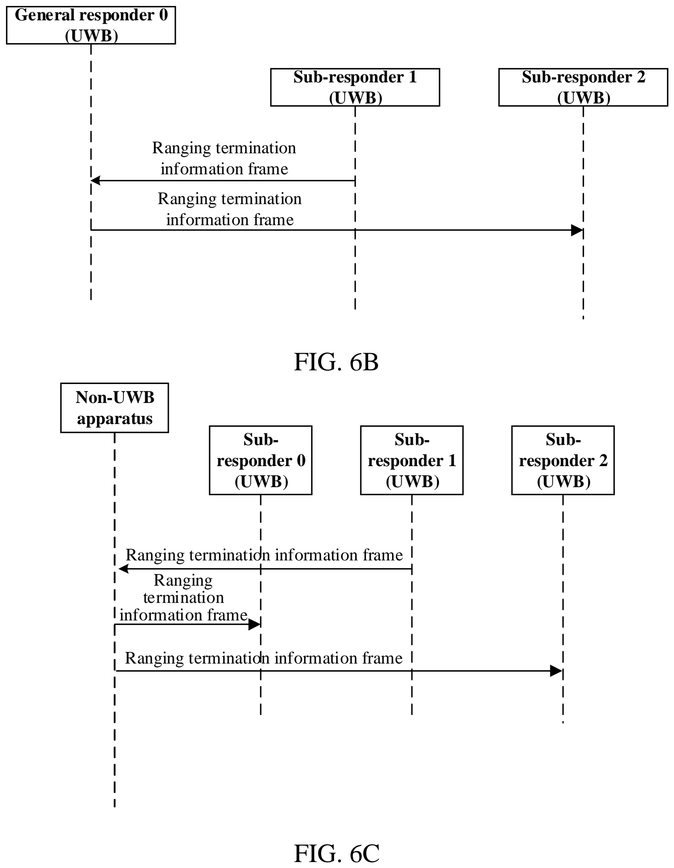

As shown in FIG. 6B, when a plurality of child responders are not connected to each other, but are only connected to a parent responder, a child responder that has received the ranging termination information frame may send the ranging termination information frame to the parent responder, and the parent responder may forward the ranging termination information frame. A child responder that has not received the ranging termination information frame may also request the parent responder to forward the ranging termination information frame. FIG. 6B depicts a case where the parent responder actively forwards the ranging termination information frame.

In some exemplary embodiments, the controller may be a non-UWB apparatus. For example, each of the plurality of UWB apparatuses is connected to one non-UWB apparatus over a wired link, and a UWB apparatus that has received the ranging termination information frame forwards the ranging termination information frame to the non-UWB apparatus over the wired link, and the non-UWB apparatus forwards the ranging termination information frame to UWB apparatuses that have not received the ranging termination information frame over the wired link.

As shown in FIG. 6C, when a plurality of child responders are not connected to each other but are connected to a non-UWB apparatus, a responder that has received the ranging termination information frame may also send the ranging termination information frame to the non-UWB apparatus for forwarding by the non-UWB apparatus. Each child responder that has not received the ranging termination information frame may also request the non-UWB apparatus to forward the ranging termination information frame. FIG. 6C depicts a case where a non-UWB apparatus actively forwards a ranging termination information frame.

As mentioned above, the ranging termination information frame is synchronized among the plurality of responders in a wireless or wired manner. In addition, since the ranging synchronization frame also carries key information of ranging, contents in the ranging synchronization frame are consistent to all responders, that is, the responder that has successfully received the ranging synchronization frame can forward the ranging synchronization frame to responders that have not received the ranging synchronization frame in a wired manner.

In some other exemplary embodiments, the UWB ranging method includes: each UWB apparatus that has received the ranging synchronization frame forwarding the ranging synchronization frame to other UWB apparatuses over a wired link.

In the present embodiment, when the responder receives the ranging synchronization frame sent by the initiator, the responder forwards the ranging synchronization frame in a wired manner.

The preceding text is focused on taking the ranging termination information frame as an example to explain its synchronization achieved in a wired manner, thereby improving a ranging success rate of the entire ranging block. However, in the ranging flow, the ranging synchronization frame is also initiated by the initiator and received by each responder at the same time, and its content is consistent to all responders, that is, when a certain responder fails to receive the ranging synchronization frame, it can also be achieved that all responder nodes in the wired network receive the ranging synchronization frame through a wired sharing method. The sharing method of the ranging synchronization frame may also be performed with reference to the wired sharing method of the ranging termination information frame mentioned above.

In a wireless communication system, when there is no ACK mechanism between an initiator and responders and there are a plurality of responders, when one responder receives a key information packet but other responders do not receive it, internal sharing between the responders can be used to achieve that as long as one party receives it, all the other responders can receive it, and the ranging success rate of the entire system can be improved.

According to the UWB ranging method of the present disclosure, by sharing key packets (ranging synchronization frames and ranging termination information frames) by the UWB apparatus, the problem of ranging failure caused by failure of one or more nodes in receiving key packets can be avoided, and ranging reliability of the entire UWB ranging system can be improved.

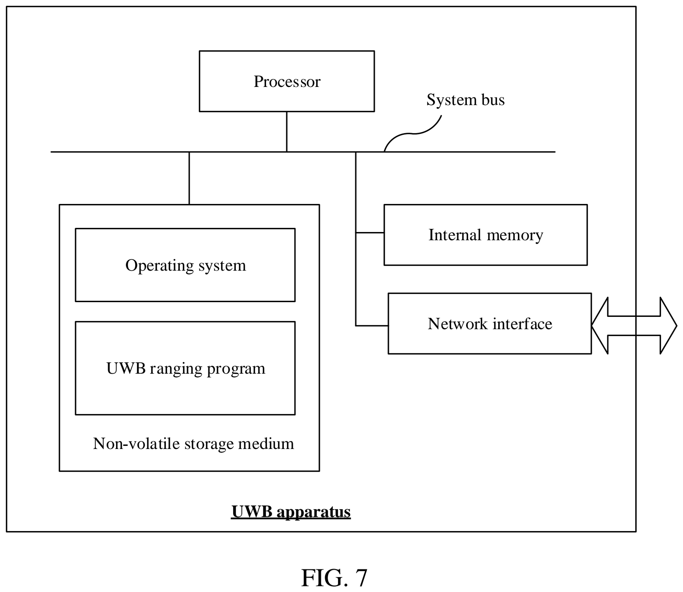

Based on the above embodiments, embodiments of the present disclosure further provide a UWB apparatus, and a principle block diagram thereof may be as shown in FIG. 7. The above UWB apparatus includes a processor, a memory, and a network interface connected by a system bus. Herein, the processor of the UWB apparatus is configured to provide computing and control capabilities. The memory of the UWB apparatus includes a non-volatile storage medium and an internal memory. The non-volatile storage medium is configured to store an operating system and a UWB ranging program. The internal memory is configured to provide an environment for running of the operating system and UWB ranging program in the non-volatile storage medium. The network interface of the UWB apparatus is configured to communicate with an external terminal through a network connection. When the UWB ranging program is executed by the processor, the steps of any one of the above UWB ranging methods are implemented.

Those skilled in the art can understand that the principle block diagram shown in FIG. 7 is merely a block diagram of some structures related to the solution of the present disclosure, and does not constitute a limitation on the UWB apparatus to which the solution of the present disclosure is applied, and the actual UWB apparatus may include more or fewer components than those shown in the figure, or combine some components, or have different component arrangement.

In one embodiment, a UWB apparatus is provided, the UWB apparatus includes a memory, a processor, and a UWB ranging program stored in the memory and executable on the processor. The UWB ranging program executes the following operational instructions when executed by the processor: in a ranging report slot, which is used for receiving a ranging termination information frame, receiving a ranging termination information frame by a UWB apparatus in a ranging round; when it is determined that the ranging termination information frame has been received, forwarding the ranging termination information frame by the UWB apparatus subsequent to the ranging report slot; and when it is determined that the ranging termination information frame has not been received, receiving the ranging termination information frame by the UWB apparatus subsequent to the ranging report slot.

The embodiment of the present disclosure further provides a computer-readable storage medium, wherein a UWB ranging program is stored on the computer-readable storage medium, and when the UWB ranging program is executed by a processor, the steps of any one of the UWB ranging methods provided by the embodiment of the present disclosure are implemented.

Those skilled in the art can clearly understand that, for convenience and conciseness of description, the division of the above functional units and modules is only illustrated as an example. In practical application, the above-described functions can be assigned to be accomplished by different functional units and modules according to the needs, that is, the internal structure of the above apparatus can be divided into different functional units or modules to accomplish all or part of the above described functions. Each functional unit and module in the embodiment can be integrated in one processing unit, or each unit can exist physically separately, or two or more units can be integrated in one unit. The integrated units can be achieved either in the form of hardware or in the form of a software functional unit. In addition, the specific names of each functional unit and module are only for the purpose of facilitating mutual differentiation, and are not used to limit the scope of protection of the present disclosure. The specific working process of the units and modules in the above system can be referred to the corresponding process in the aforementioned method embodiment, and will not be repeated here.

In the above-described embodiments, the description of each embodiment has different emphasis, and parts that are not detailed or recorded in a certain embodiment can refer to the relevant descriptions of other embodiments.

Those of ordinary skill in the art will appreciate that the units and algorithmic steps of the examples described in combination with the embodiments disclosed herein can be implemented in electronic hardware, or a combination of computer software and electronic hardware. Whether these functions are performed in hardware or software depends on the specific application and design constraints of the technical solution. Those skilled in the art may use different methods for implementing the described functions for each particular application, but such implementations should not be considered beyond the scope of the present disclosure.

In the embodiments provided by the present disclosure, it should be understood that the disclosed apparatus/terminal device and method may be implemented in other ways. For example, the above-described device/terminal device embodiments are merely schematic, for example, the above-described division of modules or units is only a logical function division, and there may be other division methods in actual implementation, for example, a plurality of units or components may be combined or integrated into another system, or some features may be ignored or not executed.

The integrated modules/units described above may be stored in a computer-readable storage medium if implemented in the form of software functional units and sold or used as independent products. Based on this understanding, the implementation of all or part of the process in the methods of the above-described embodiments of the present disclosure may also be completed by instructing related hardware by a computer program, the above-described computer program may be stored in a computer-readable storage medium, and when executed by a processor, the computer program may implement the steps of each of the above-described method embodiments. The above-described computer program includes computer program code, and the above-described computer program code may be in a source code form, an object code form, an executable file, some intermediate form, or the like. The above-described computer-readable medium may include any entity or apparatus capable of carrying the above-described computer program code, a recording medium, a USB flash drive, a removable hard disk, a magnetic disk, an optical disk, a computer memory, a Read-Only Memory (ROM), a random access memory (RAM), an electrical carrier signal, a telecommunication signal, a software distribution medium, etc. It should be noted that the contents contained in the above-described computer-readable storage medium may be appropriately added or removed according to the requirements of legislation and patent practice in the jurisdiction.

The above-described embodiments are merely used to explain the technical solutions of the present disclosure, but not to limit them. Although the present disclosure has been described in detail with reference to the aforementioned embodiments, it should be understood by those of ordinary skill in the art that they can still modify the technical solutions recorded in the above-described embodiments, or make equivalent substitutions for some of the technical features therein; these modifications or substitutions do not make the essence of the corresponding technical solutions out of the essence and scope of the technical solutions of each embodiment of the present disclosure, and should be included within the protection scope of the present disclosure.

## Claims

1. A Ultra Wide Band (UWB) ranging method, comprising:
receiving, by a UWB apparatus, a ranging termination information frame in a ranging report slot in a ranging round;
forwarding, by the UWB apparatus, the ranging termination information frame subsequent to the ranging report slot when the UWB apparatus determines that the ranging termination information frame has been received; or
receiving, by the UWB apparatus, the ranging termination information frame subsequent to the ranging report slot when the UWB apparatus determines that the ranging termination information frame has not been received.

2. The UWB ranging method according to claim 1, wherein the ranging termination information frame that is forwarded is encrypted.

3. The UWB ranging method according to claim 1, wherein the ranging termination information frame comprises: a plurality of ranging time differences; each of the ranging time differences represents a time difference between a transmission time of a ranging start frame and a reception time of a ranging response frame in one ranging round.

4. The UWB ranging method according to claim 1, wherein when the UWB apparatus determines that the ranging termination information frame has been received, the UWB apparatus forwards the ranging termination information frame in at least one forwarding slot of a plurality of forwarding slots subsequent to the ranging report slot.

5. The UWB ranging method according to claim 1, wherein the UWB apparatus forwards the ranging termination information frame in a wireless communication mode in at least one forwarding slot subsequent to the ranging report slot.

6. The UWB ranging method according to claim 5, wherein the wireless communication mode comprises any one of Bluetooth transmission, UWB transmission, or UWB narrowband transmission.

7. The UWB ranging method according to claim 1, wherein a signal transmission power used by the UWB apparatus for forwarding the ranging termination information frame is less than a signal transmission power used by the UWB apparatus for transmitting a ranging response frame in the ranging round.

8. The UWB ranging method according to claim 1, wherein the UWB apparatus forwards the ranging termination information frame over a wired link.

9. The UWB ranging method according to claim 8, wherein the UWB apparatus directly forwards the ranging termination information frame over the wired link; or
the UWB apparatus forwards the ranging termination information frame through a controller connected to the UWB apparatus.

10. A UWB apparatus comprising a memory, a processor, and a UWB ranging program stored in the memory and executable by the processor, wherein when the UWB ranging program is executed by the processor, steps of the UWB ranging method according to any one of claims 1 to 9 are implemented.

11. A UWB ranging system comprising a plurality of first UWB apparatuses, wherein at least one of the first UWB apparatuses is the UWB apparatus of claim 10, the UWB ranging system further comprises a second UWB apparatus; wherein in one ranging round, the plurality of first UWB apparatuses measure distances from the second UWB apparatus to the plurality of first UWB apparatuses respectively.

12. The UWB ranging system according to claim 11, wherein the second UWB apparatus is provided on an electronic device to have a digital key function, and the plurality of first UWB apparatuses are each arranged on a vehicle.
